# EUROPÄISCHE PATENTSCHRIFT

(11) **EP 2 125 468 B1**
(45) Veröffentlichungstag und Bekanntmachung des Hinweises auf die Patenterteilung: **27.10.2010**
(21) Anmeldenummer: 08715954.7
(22) Anmeldetag: 22.02.2008
(51) Int. Cl.: B60T 17/08, F16J 3/02

(54) **MEMBRANE FÜR DRUCKMITTELBETÄTIGTE BREMSZYLINDER MIT ZENTRIERRING**
DIAPHRAGM FOR PRESSURE-MEDIUM-ACTUATED BRAKE CYLINDERS WITH CENTRING RING
MEMBRANE POUR CYLINDRES DE FREIN À COMMANDE PAR FLUIDE SOUS PRESSION, AVEC ANNEAU DE CENTRAGE

(30) Priorität: 22.02.2007 DE 102007008730
(43) Veröffentlichungstag der Anmeldung: 02.12.2009
(73) Patentinhaber: KNORR-BREMSE Systeme für Nutzfahrzeuge GmbH, 80809 München (DE)
(72) Erfinder: HEMERY, Franck, F-14600 Honfleur (FR)
(74) Vertreter: Mattusch, Gundula
(86) Internationale Anmeldenummer: PCT/EP2008/001403
(87) Internationale Veröffentlichungsnummer: WO 2008/101710

(56) Entgegenhaltungen:
- WO-A-98/32952
- DE-A1- 3 329 530
- DE-A1- 4 011 739

## Beschreibung

### Stand der Technik

Die Erfindung geht aus von einem druckmittelbetätigten Bremszylinder mit einer Membrane gemäß dem Oberbegriff von Anspruch 1.

Ein Bremszylinder mit Membrane ist beispielsweise aus der DE 40 11 739 A1 bekannt und durch den Druck einer Betriebsbremskammer eines Betriebsbremszylinders beaufschlagbar, um eine Betriebsbremse zu betätigen. Dabei ist die Membrane zwischen dem Betriebsbremszylinder und einer Zwischenwand zwischen dem Betriebsbremszylinder und einem Federspeicherbremszylinder eines kombinierten Betriebsbrems- und Federspeicherbremszylinder dadurch geklemmt, dass die Ränder des Betriebsbremszylinders und der Zwischenwand nach außen flanschartig umgebogen sind und zwischen sich einen radial äußeren Befestigungsrand der Membrane aufnehmen, wobei die Ränder durch einen Spannring gegeneinander gespannt sind.

Bei der Fertigung der Membrane kann es jedoch vorkommen, dass sie nicht mittig, d.h. nicht koaxial zur Mittelachse des kombinierten Betriebsbrems- und Federspeicherbremszylinders eingebaut wird, so dass die mechanischen Spannungen in der Membrane nach dem Spannen des Spannrings ungleichmäßig verteilt sind und sie im Hinblick auf die hohe Dauerbiegebelastung mit der Zeit aus ihrer Klemmung herausgezogen bzw. brüchig wird oder einreißt und dadurch unerwünschte Leckagen entstehen.

Gemäß der gattungsgemäßen DE 33 29 530 A1 wird zur Lösung dieses Problems vorgeschlagen, dass der radial äußere Befestigungsrand der Membrane einen keilförmigen, sich nach radial innen verjüngenden Querschnitt aufweist und mit diesem in eine komplementär geformte Aufnahme mit keilförmigem, sich nach radial außen erweiternden Querschnitt zwischen einem Zylinderabschnitt und einem weiteren Zylinderabschnitt des Bremszylinders geklemmt ist, wobei an der Membrane wenigstens ein sich in axialer Richtung erstreckender, in Bezug zum Befestigungsrand nach radial innen versetzt angeordneter Zentrierring ausgebildet ist, durch welchen sie gegen eine radial innere Umfangsfläche einer Wandung des Bremszylinders zentrierbar ist und diese radial innere Umfangsfläche eine Anlagefläche für den Zentrierring der Membrane aufweist.

Der vorliegenden Erfindung liegt demgegenüber die Aufgabe zugrunde, einen Bremszylinder der eingangs erwähnten Art derart weiter zu entwickeln, dass eine weiter verbesserte Klemmung und Zentrierung der Membrane im Bremszylinder gegeben ist.

Diese Aufgabe wird erfindungsgemäß durch die Merkmale von Anspruch 1 gelöst.

### Offenbarung der Erfindung

Da an der Membrane wenigstens ein sich in axialer Richtung erstreckender, in Bezug zum Befestigungsrand nach radial innen versetzt angeordneter Zentrierring ausgebildet ist, durch welchen sie gegen eine radial innere Umfangsfläche einer Wandung des Bremszylinders zentrierbar ist, ist abweichend von einer zentrischen Einbaulage kein falscher Einbau der Membrane in Bezug zum Bremszylinder möglich. Dies vereinfacht und beschleunigt die Fertigung des Bremszylinders. Weiterhin wird durch die verbessere Zentrierung die Dichtigkeit der Membrane erhöht und ihre Lebensdauer verlängert.

Erfindungsgemäß sorgt eine eine axiale Komponente aufweisende Klemmkraft der gegeneinander geklemmten Zylinderabschnitte für eine radial nach außen gerichtete Kraft auf die Membrane, wodurch der Zentrierring der Membrane gegen die radial innere Umfangsfläche der Wandung des Bremszylinders gepresst wird. Mit anderen Worten sorgt die axiale Komponente der Klemmkraft dafür, dass der Befestigungsrand aufgrund der Keilwirkung nach radial außen gezogen und dadurch der Zentrierring mit höherer radialer Kraft gegen die Anlagefläche an der Wandung des Bremszylinders im Sinne einer Selbstverstärkung der Zentrierung gepresst wird. Dadurch steigt die Sicherheit gegen ein Herausziehen des radial äußeren Befestigungsrandes der Membrane aus der Klemmung weiter.

Durch die in den Unteransprüchen aufgeführten Maßnahmen sind vorteilhafte Weiterbildungen und Verbesserungen der in den unabhängigen Ansprüchen angegebenen Erfindung möglich.

Insbesondere kann der Zentrierring in Umfangsrichtung gesehen vollständig umlaufend oder aus Ringabschnitten bestehend und mit der Membrane einstückig ausgebildet sein.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Federspeicherbremszylinders mit einer Membrane gemäß einer be- vorzugten Ausführungsform der Erfindung;

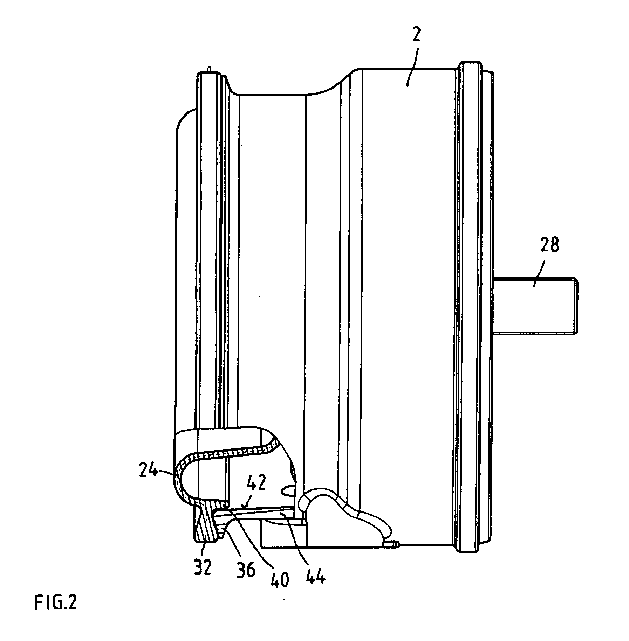

- Fig.2: eine teilaufgeschnittene Seitenansicht des Betriebsbremszylinders des kombinierten Betriebsbrems- und Federspeicherbremszylinders von Fig.1 mit der Membrane.

### Beschreibung des Ausführungsbeispiels

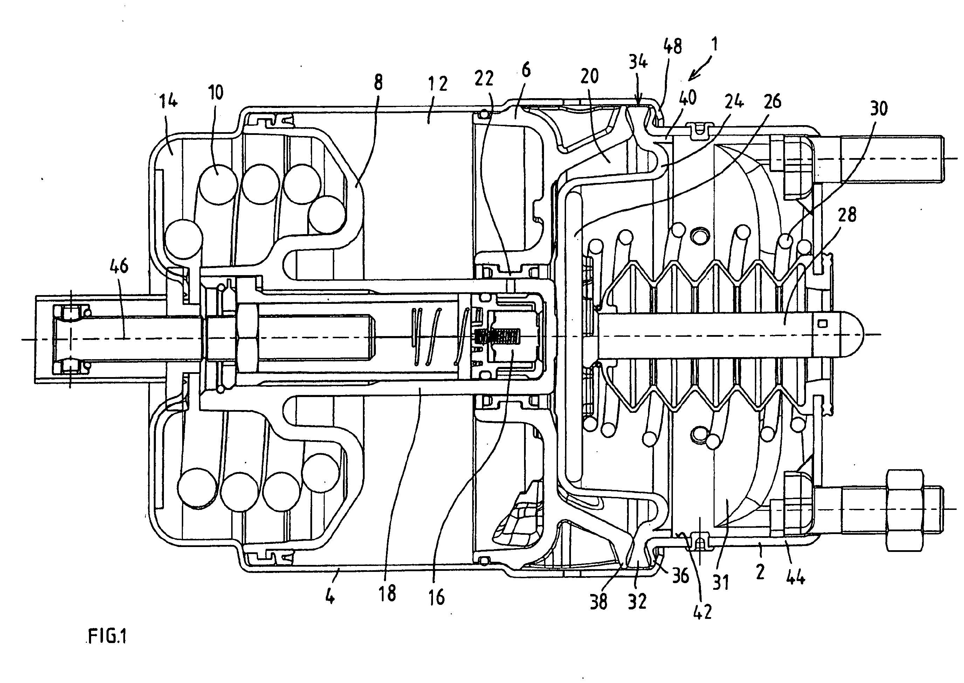

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Kolbenstange 18 verbunden, welche sich durch die Zwischenwand 6 in eine Betriebsbremskammer 20 des Betriebsbremszylinders 2 erstreckt. Eine in der Zwischenwand 6 eingesetzte Dichtung 22 dichtet gegenüber der Außenwand der Kolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegengesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung zentrierender Zentrierring vorgesehen ist.

Nicht zuletzt liegt die radial innere -Umfangsfläche 42 des Betriebsbremszylinders 2, gegen welche der Zentrierring 40 zentriert, bevorzugt auf einem gedachten Zylinder, dessen Mittelachse koaxial zur Zylinderachse 46 ist.

Der Zentrierring 40 kann wie gezeigt in Umfangsrichtung gesehen vollständig umlaufend oder aus Ringabschnitten bestehend ausgebildet sein. Die Membrane 24 ist bevorzugt aus Gummi gefertigt und der Zentrierring 40 mit ihr einstückig ausgebildet.

Dann sorgt eine eine axiale Komponente aufweisende Klemmkraft der gegeneinander geklemmten Zwischenwand 6 und Betriebsbremszylinder 2 dafür, dass der Zentrierring 40 der Membrane 24 gegen die radial innere Umfangsfläche 42 der Wandung 44 des Betriebsbremszylinders 2 gepresst wird. Mit anderen Worten sorgt die axiale Komponente der Klemmkraft dafür, dass der Befestigungsrand 32 aufgrund der Keilwirkung nach radial außen gezogen und dadurch der Zentrierring 40 mit höherer radialer Kraft gegen die radial innere Umfangsfläche 42 der Wandung 44 des Betriebsbremszylinders 2 im Sinne einer Selbstverstärkung der Zentrierung gepresst wird.

Realisierbar ist eine solche axiale Klemmkraftkomponente beispielsweise dadurch, dass der einen Flansch 36 ausbildende Rand des Betriebsbremszylinders 2 sowie der Flansch 38 der Zwischenwand 6 von einem Rand 48 der Wandung des Federspeicherbremszylinders 4 nach Art einer Bördelung übergriffen werden, welche beispielsweise durch einen Umformprozess hergestellt wird. Diese Bördelung sorgt dann für die axiale Komponente der Klemmkraft.

Die Verwendung der erfindungsgemäßen Membrane 24 mit Zentrierring 40 ist nicht auf einen kombinierten Betriebsbrems- und Federspeicherbremszylinder 1 beschränkt, sondern eine solche Membrane 24 kann selbstverständlich bei jeglicher Art von druckmittelbetätigtem Bremszylinder eingesetzt werden.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Kolbenstange
- 20: Betriebsbremskammer
- 22: Dichtung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Rand

## Patentansprüche

1. Druckmittelbetätigter Bremszylinder (1) mit einer Membrane (24), welche einen radial äußeren Befestigungsrand (32) zum Festlegen der Membrane (24) an dem Bremszylinder (1) beinhaltet, wobei
a) der radial äußere Befestigungsrand (32) der Membrane (24) einen keilförmigen, sich nach radial innen verjüngenden Querschnitt aufweist und mit diesem in eine komplementär geformte Aufnahme (34) mit keilförmigem, sich nach radial außen erweiternden Querschnitt zwischen einem Zylinderabschnitt (2) und einem weiteren Zylinderabschnitt (6) des Bremszylinders (1) geklemmt ist,
b) an der Membrane (24) wenigstens ein sich in axialer Richtung erstreckender, in Bezug zum Befestigungsrand (32) nach radial innen versetzt angeordneter Zentrierring (40) ausgebildet ist, durch welchen sie gegen eine radial innere Umfangsfläche (42) einer Wandung (44) des Bremszylinders (1) zentrierbar ist und diese radial innere Umfangsfläche (42) eine Anlagefläche für den Zentrierring (40) der Membrane (24) aufweist, **dadurch gekennzeichnet, dass**
c) durch eine eine axiale Komponente aufweisende Klemmkraft der gegeneinander geklemmten Zylinderabschnitte (6, 2) der Befestigungsrand (32) aufgrund der Keilwirkung nach radial außen gezogen und **dadurch** der Zentrierring (40) mit höherer radialer Kraft gegen die radial innere Umfangsfläche (42) der Wandung (44) des Betriebsbremszylinders (2) im Sinne einer Selbstverstärkung der Zentrierung gepresst wird.

2. Druckmittelbetätigter Bremszylinder nach Anspruch 1, **dadurch gekennzeichnet, dass** der Zentrierring (40) in Umfangsrichtung gesehen vollständig umlaufend oder aus Ringabschnitten bestehend ausgebildet ist.

3. Druckmittelbetätigter Bremszylinder nach Anspruch 1 oder 2, **dadurch gekennzeichnet, dass** der Zentrierring (40) mit der Membrane (24) einstückig ausgebildet ist.

4. Druckmittelbetätigter Bremszylinder nach wenigstens einem der vorhergehenden Ansprüche, **dadurch gekennzeichnet, dass** der Zentrierring (40) im wesentlichen senkrecht zu einer Mittelebene des Befestigungsrandes (32) angeordnet ist.

5. Druckmittelbetätigter Bremszylinder nach einem der vorhergehenden Ansprüche, **dadurch gekennzeichnet, dass** die Membrane (24) aus Gummi gefertigt ist.

6. Druckmittelbetätigter Bremszylinder nach einem der vorhergehenden Ansprüche, **dadurch gekennzeichnet, dass** die Anlagefläche (42) auf einem gedachten Zylinder liegt, dessen Mittelachse koaxial zur Zylinderachse (46) ist.

7. Druckmittelbetätigter Bremszylinder nach wenigstens einem der vorhergehenden Ansprüche, **dadurch gekennzeichnet, dass** er ein kombinierter Betriebsbrems - und Federspeicherbremszylinder (1) mit einem Betriebsbremszylinder (2), einem Federspeicherbremszylinder (4) und einer diesen zwischen geordneten Zwischenwand (6) ist.

8. Druckmittelbetätigter Bremszylinder nach einem der vorhergehenden Ansprüche, **dadurch gekennzeichnet, dass** die Membrane (24) eine mit Druckmittel be- und entlastbare Betriebsbremskammer (20) des Betriebsbremszylinders (2) von einer eine Rückholfeder (30) aufnehmenden Federkammer (31) trennt.

9. Druckmittelbetätigter Bremszylinder nach Anspruch 8, **dadurch gekennzeichnet, dass** die Membrane (24) mit einem steifen Membranteller (26) zusammenwirkt, welcher mit einer Druckstange (28) des Betriebsbremszylinders (2) verbunden ist.

## Claims

1. Pressure medium-actuated brake cylinder (1) comprising a diaphragm (24) having a radially outer fastening edge (32) for the location of the diaphragm (24) on the brake cylinder (1), wherein
a) the radially outer fastening edge (32) of the diaphragm (24) has a wedge-shaped cross-section tapering radially inwards and is clamped thereby into a complementary location (34) having a wedge-shaped cross-section expanding radially outwards between a cylinder section (2) and a further cylinder section (6) of the brake cylinder (1),
b) on the diaphragm (24), at least one centring ring (40) extending in the axial direction and offset radially inwards with respect to the fastening edge (32) is formed, whereby it can be centred against a radially inner circumferential surface (42) of a wall (44) of the brake cylinder (1) and wherein this radially inner circumferential surface (42) forms a contact surface for the centring ring (40) of the diaphragm (24), **characterised in that**
c) the fastening edge (32) is, by a clamping force of the mutually clamped cylinder sections (6, 2) which has an axial component, pulled radially outwards as a result of the wedge action and that, as a result, the centring ring (40) is pressed against the radially inner circumferential surface (42) of the wall (44) of the service brake cylinder (2) with a higher radial force in a self-reinforcement of the centring action.

2. Pressure medium-actuated brake cylinder according to claim 1, **characterised in that** the centring ring (40) is completely continuous in the circumferential direction or consists of ring sections.

3. Pressure medium-actuated brake cylinder according to claim 1 or 2, **characterised in that** the centring ring (40) is configured integrally with the diaphragm (24).

4. Pressure medium-actuated brake cylinder according to one or more of the preceding claims, **characterised in that** the centring ring (40) is arranged substantially perpendicularly with respect to a central plane of the fastening edge (32).

5. Pressure medium-actuated brake cylinder according to any of the preceding claims, **characterised in that** the diaphragm (24) is made of rubber.

6. Pressure medium-actuated brake cylinder according to any of the preceding claims, **characterised in that** the contact surface (42) lies on an imaginary cylinder the central axis of which is coaxial with the cylinder axis (46).

7. Pressure medium-actuated brake cylinder according to one or more of the preceding claims, **characterised in that** it is a combined service brake and spring brake cylinder (1) with a service brake cylinder (2), a spring brake cylinder (4) and an intermediate wall (6) disposed between them.

8. Pressure medium-actuated brake cylinder according to any of the preceding claims, **characterised in that** the diaphragm (24) separates a service brake chamber (20) which can be loaded with and relieved of pressure medium from a spring chamber (31) which accommodates a return spring (30).

9. Pressure medium-actuated brake cylinder according to claim 8, **characterised in that** the diaphragm (24) acts together with a rigid diaphragm plate (26) connected to a thrust rod (28) of the service brake cylinder (2).

## Revendications

1. Cylindre (1) de frein actionné par un fluide sous pression, comprenant une membrane (24), qui comporte un bord (32) de fixation extérieur radialement pour fixer la membrane (24) au cylindre de frein, dans lequel
a) le bord (32) de fixation extérieur radialement de la membrane (24) a une section transversale cunéiforme, se rétrécissant vers l'intérieur radialement et est serré par celle-ci dans un logement (34) formé de manière complémentaire de section transversale s'élargissant vers l'extérieur radialement entre un segment (2) de cylindre et un autre segment (6) de cylindre du cylindre (1) de frein,
b) sur la membrane (24) est formé au moins un anneau (40) de centrage, s'étendant dans une direction axiale et décalé vers l'intérieur radialement par rapport au bord (32) de fixation, anneau par lequel elle peut être centrée sur une surface (42) périphérique intérieure radialement d'une paroi (44) du cylindre (1) de frein et cette surface (42) périphérique intérieure radialement comporte une surface d'appui pour l'anneau (40) de centrage de la membrane (24), **caractérisé en ce que**
c) par une force de serrage, ayant une composante axiale, des sections (6, 2) de cylindre serrées l'une contre l'autre, le bord (32) de fixation est, en raison de l'effet de coin, tiré vers l'extérieur radialement et ainsi l'anneau (40) de centrage est pressé avec une force radiale plus grande contre la surface (42) périphérique intérieure radialement de la paroi (44) du cylindre (2) de frein de service dans le sens d'un autorenforcement du centrage.

2. Cylindre de frein actionné par un fluide sous pression suivant la revendication 1, **caractérisé en ce que** l'anneau (40) de centrage est formé, vu dans la direction périphérique, en faisant complètement le tour et en étant constitué de segment annulaire.

3. Cylindre de frein actionné par un fluide sous pression suivant la revendication 1 ou 2, **caractérisé en ce que** l'anneau (40) de centrage est constitué d'une seule pièce avec la membrane (24).

4. Cylindre de frein actionné par un fluide sous pression suivant au moins l'une des revendications précédentes, **caractérisé en ce que** l'anneau (40) de centrage est disposé sensiblement perpendiculairement à un plan médian du bord (32) de fixation.

5. Cylindre de frein actionné par un fluide sous pression suivant l'une des revendications précédentes, **caractérisé en ce que** la membrane (24) est en caoutchouc.

6. Cylindre de frein actionné par un fluide sous pression suivant l'une des revendications précédentes, **caractérisé en ce que** la surface (42) de contact s'applique sur un cylindre imaginaire dont l'axe médian est coaxial à l'axe (46) du cylindre.

7. Cylindre de frein actionné par un fluide sous pression suivant au moins l'une des revendications précédentes, **caractérisé en ce que** c'est un cylindre combiné de frein de service et de frein à ressort accumulateur, comprenant un cylindre (2) de frein de service, un cylindre (4) de frein à ressort accumulateur et une paroi (6) intermédiaire interposée entre eux.

8. Cylindre de frein actionné par un fluide sous pression suivant l'une des revendications précédentes, **caractérisé en ce que** la membrane (24) sépare une chambre (20) de frein de service du cylindre (2) de frein de service d'une chambre (31) à ressort, dans laquelle est logé un ressort (30) de rappel.

9. Cylindre de frein actionné par un fluide sous pression suivant l'une des revendications précédentes, **caractérisé en ce que** la membrane (24) coopère avec une assiette (26) rigide de membrane, qui est reliée à un poussoir (28) du cylindre (2) de frein de service.
